# EUROPEAN PATENT APPLICATION

(11) **EP 2 085 876 A2**
(43) Date of publication of application: **05.08.2009**
(21) Application number: 08167795.7
(22) Date of filing: 29.10.2008
(51) Int. Cl.: G06F 3/14, G09G 5/00

(54) **Method for writing data and display apparatus for the same**

(30) Priority: 31.01.2008 KR 20080010243
(71) Applicant: SAMSUNG ELECTRONICS CO., LTD., Suwon-si, Gyeonggi-do (KR)
(72) Inventor: Kim, Jong-hwan, Seoul (KR)
(74) Representative: Rooney, John-Paul

(57) **Abstract**

A method for writing data and a display apparatus using the same are provided. The display apparatus records data to a storage space (150) from which an external device reads the data. According to this, it is possible for the display apparatus to write data, to the display apparatus itself, which the external device reads from the display apparatus, and to write the data without an extra data recording device.

## Description

### BACKGROUND OF THE INVENTION

### 1. Field of the Invention

Methods and apparatuses consistent with the present invention relate to writing data, and, more particularly, to writing data such as Extended Display Identification Data (EDID).

### 2. Description of the Prior Art

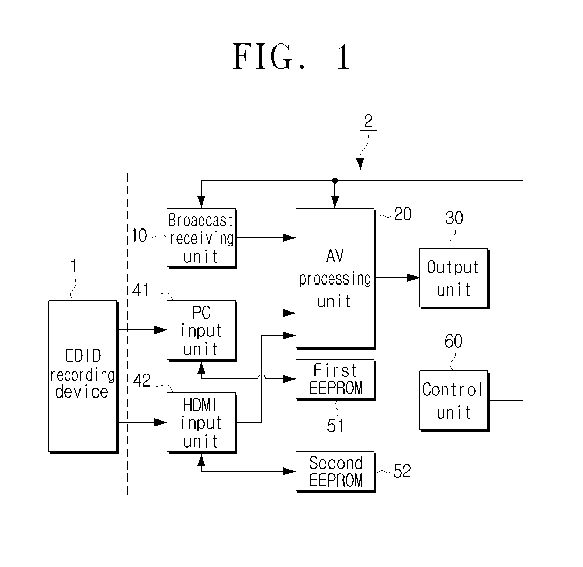

FIG. 1 is a block diagram of a conventional Digital TV (DTV). In addition to the DTV 2, an EDID recording device 1 is further illustrated in FIG. 1 to help understand and explain the invention.

Referring to FIG. 1, the conventional DTV 2 comprises a broadcast receiving unit 10, an Audio-Video (AV) processing unit 20, an output unit 30, a PC input unit 41, a High Definition Multimedia Interface (HDMI) input unit 42, a first Electrically Erasable and Programmable Read Only Memory (EEPROM) 51, a second EEPROM 52, and a control unit 60.

The broadcast receiving unit 10 receives a broadcast signal and demodulates the signal. The PC input unit 41 receives a first external image from a first external device, for example a PC, not illustrated, which is connected through a PC input terminal. The HDMI input unit 42 receives a second external image from a second external device, for example a Digital Versatile Disk (DVD) player, not illustrated, which is connected through a HDMI input terminal.

The AV processing unit 20 processes the broadcasting or image signal received from the broadcast receiving unit 10, the PC input unit 41, or the HDMI input unit 42. The output unit 30 outputs the video or audio signal which is processed by the AV processing unit 20.

The first EEPROM 51 stores a first EDID which is read by the first external device connected to the PC input unit 41. The second EEPROM 52 stores a second EDID which is read by the second external device connected to the HDMI input unit 42.

The EDID recording device 1 is connected to the PC input unit 41 and the HDMI input unit 42. The EDID recording device 1 records the first EDID to the first EEPROM 51 through the PC input unit 41 and the second EDID to the second EEPROM 52 through the HDMI input unit 42.

As mentioned above, an extra work using an extra equipment, such as the EDID recording device 1, is required to record the EDIDs to the first EEPROM 51 and the second EEPROM 52, causing an increase of cost and time. Further, only a manufacturer or an after service center which has the EDID recording device 1 may do the EDID recording work but a user who doesn't have the EDID recording device 1 may not do the EDID recording work.

### SUMMARY OF THE INVENTION

According to the present invention there is provided an apparatus and method as set forth in the appended claims. Other features of the invention will be apparent from the dependent claims, and the description which follows.

An aspect of the present invention provides a method for writing data such as EDID, to a display apparatus such as a DTV, without an EDID recording device and to provide a method for a display apparatus to write data, to the display apparatus itself, and for an external device such as a PC and a DVD player to read from the display apparatus, and the display apparatus for the same.

Another aspect of the present invention provides a method for a display apparatus to write data, to the display apparatus itself, which an external device refers to send an image signal, supported by the display apparatus, to the display apparatus and the display apparatus using the same.

According to an aspect of the invention, there is provided a display apparatus comprising an external interface which is connected to at least one external device for communication, a storage unit which provides a space for recording data which the at least one external device, connected through the external interface, reads and a control unit which records the data to the storage unit. the data may be referred by the at least one external device for sending an image signal, supported by the display apparatus, to the external interface. The data may be the EDID of the display apparatus. The data may be display information provided in the display apparatus.

It is desirable for the storage unit to be connected to the control unit electrically for sending the data to the storage unit. It is desirable for the control unit to record the data to the storage unit if an indicator has a predetermined value. The control unit may determine whether the indicator has the predetermined value, if the display apparatus is turned on.

The external interface may comprise at least one external input unit which is connected to the at least one external device for communication and the storage unit may comprise at least one storage medium which is connected to the respective at least one external input unit. The display apparatus may comprise at least one switching unit which switches one among the at least one storage medium for connecting to the control unit and the control unit may control switching operation of the at least one switching unit so that the control unit is connected to the at least one storage medium sequentially.

The display apparatus may comprise a memory in which the data is recorded and the control unit may read the data from the memory and writes the data to the storage unit. The display apparatus may comprise a broadcast receiving unit which receives a broadcasting signal, a signal processing unit which processes at least one of the broadcasting signal, which is received through the broadcast receiving unit, and the image signal, which is received from the at least one external device trough the external interface and a display unit which displays at least one of the broadcasting signal and the image signal which are processed by the signal processing unit. The display apparatus may comprise a signal processing unit which processes the image signal which is received from the at least one external device through the external interface and a display unit which displays the image signal which is processed by the signal processing unit.

According to an aspect of the invention, there is provided a data recording method of a display apparatus connected to an external device for communication, comprising recording a data, which the external device reads, to a storage space for recording the data in the display apparatus. The data may be referred by the external device for sending an image signal, supported by the display apparatus, to the display apparatus. The data may be the EDID of the display apparatus. The data may be display information provided in the display apparatus. The display apparatus may be a TV or a monitor. The recording the data may be performed only if an indicator has a predetermined value.

According to an aspect of the invention, there is provided a display apparatus comprising an external interface which is connected to an external device for communication, a storage unit which provides a space for recording data which is referred by the external device for sending an image signal, supported by the display apparatus, to the external interface, and a control unit which records the data to the storage unit.

According to an aspect of the invention, there is provided a display apparatus comprising an external interface which is connected to an external device for communication, a display unit which displays an image signal received from the external device through the external interface, a storage unit which provides a space for recording data which is information of the display unit, and a control unit which records the data to the storage unit.

### BRIEF DESCRIPTION OF THE DRAWINGS

The above and other aspects and features of the present invention will be apparent from the following detailed description taken in conjunction with the accompanying drawings, in which:
FIG. 1 illustrates a block diagram of a conventional DTV;
FIG. 2 illustrates a block diagram of a DTV according to a first exemplary embodiment of the present invention;
FIG. 3 illustrates a block diagram of a DTV according to a second exemplary embodiment of the present invention;
FIG. 4 illustrates a block diagram of a DTV according to a third exemplary embodiment of the present invention;
FIG. 5 illustrates a block diagram of a DTV according to a fourth exemplary embodiment of the present invention;
FIG. 6 illustrates a block diagram of a DTV according to a fifth exemplary embodiment of the present invention;
FIG. 7 illustrates a block diagram of a DTV according to a sixth exemplary embodiment of the present invention;
FIG. 8 illustrates a flowchart of an EDID recording operation in a DTV according to a seventh exemplary embodiment of the present invention;
FIG. 9 illustrates a block diagram of a display apparatus according to an eighth exemplary embodiment of the present invention;
FIG. 10 illustrates a flowchart of a data recording operation in a display apparatus according to a ninth exemplary embodiment of the present invention;
FIG. 11 illustrates a block diagram of a display apparatus according to an tenth exemplary embodiment of the present invention; and
FIG. 12 illustrates a block diagram of a display apparatus according to an eleventh exemplary embodiment of the present invention.

### DETAILED DESCRIPTION OF EXEMPLARY EMBODIMENTS OF THE INVENTION

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims.

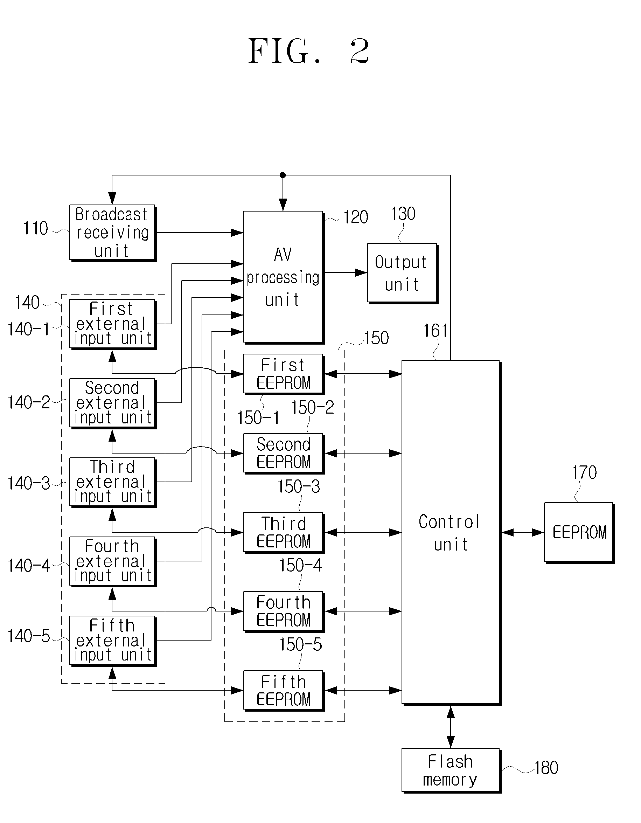

FIG. 2 illustrates a block diagram of a DTV according to a first exemplary embodiment of the present invention. Hereafter, the first exemplary embodiment of the present invention is explained referring to FIG. 2.

The DTV of the first exemplary embodiment comprises a broadcast receiving unit 110, an AV processing unit 120, an output unit 130, an external interface 140, a storage unit 150, a control unit 161, an EEPROM 170, and a flash memory 180.
The broadcast receiving unit 110 receives a broadcasting signal by cable or wireless transmission and demodulates the signal.

The AV processing unit 120 processes a broadcasting signal which the broadcast receiving unit 110 outputs or an external image signal, which is described later, which the external interface 140 outputs. The AV processing unit 120 performs signal processing such as video decoding, video scaling, On Screen Display (OSD) processing, and audio decoding.
The output unit 130 outputs the video and audio signals which are processed at the AV processing unit 120. It may be implemented using a display apparatus and a speaker.
The external interface 140 connects a DTV and external devices for communication. Referring to FIG. 2, there are five external input units, which are referred through reference numbers 140-1 to 140-5, in the external interface 140.

External devices are connected to the external input units. For example, a PC may be connected to a first external input unit 140-1, a Set Top Box (STB) may be connected to a second external input unit 140-2, a DVD player may be connected to a third external input unit 140-3, a Dvix player may be connected to a fourth external input unit 140-4, and a Blue ray Disk (BD) player may be connected to a fifth external input unit 140-5.

A standard for each external input unit may be chosen. For example, the first external input unit 140-1 may use the D-sub standard, and the second external input unit 140-2 to the fifth external input unit 140-5 may use the HDMI standard.

The storage unit 150 may comprise five EEPROMs, which are referred through reference numbers 150-1 to 150-5, which are the same number with the external input units. The EEPROMs 150-1 to 150-5 are connected to respective external input units 140-1 to 140-5. The EEPROMs 150-1 to 150-5 store respective EDIDs which are recorded by the control unit 161.

The EDIDs comprise data related to display information of the DTV. For details, the EDIDs may comprise display information such as a resolution supported by the DTV, a signal format supported by the DTV, type of the DTV, signal to noise ratio (S/N), and date of manufacturing. The EDIDs are required for an external device to send an image signal, which is supported by the DTV, to the DTV.

Also, the EDIDs may comprise information about port numbers of a DTV. External input units 140-1 to 140-5 have respective port numbers. So EDIDs stored in the respective EEPROMs 150-1 to 150-5 have different contents.

Through a cable, external devices detect physical connection to the external interface unit 140 and read the EDIDs for grasping image which is supported by the DTV. For example, the PC connected to the first external input unit 140-1 reads the EDID stored in the first EEPROM 150-1, the DVD player connected to the second external input unit 140-2 reads the EDID stored in the second EEPROM 150-2, and the other external devices also read the other EDIDs in the same manner.

The EEPROM 170 stores EDID record indicators. The EDID record indicator represents whether an EDID is recorded in an EEPROM or not. For example, if EDID record indicators are 0, then EDIDs are recorded in the EEPROMs 150-1 to 150-5, and if EDID record indicators are 1, then the EDIDs are not recorded in the EEPROMs 150-1 to 150-5.

The flash memory 180 stores the EDIDs to be recorded in the EEPROMs 150-1 to 150-5.

The control unit 161 controls overall operations of the DTV such as broadcast receiving operation of the broadcast receiving unit 110 and signal processing operation of the AV processing unit 120. The control unit 161 is connected to the EEPROMs 150-1 to 150-5 electrically and may send data to the EEPROMs 150-1 to 150-5. The control unit 161 may be connected to the EEPROMs 150-1 to 150-5 by the inter integrated circuit (I2C) method.

If the EDID record indicators in the EEPROM 170 are 1, the control unit 161 reads the EDIDs stored in the flash memory 180 sequentially and records the EDIDs to the respective EEPROMs 150-1 to 150-5 sequentially. For example, the control unit 161 reads a first EDID stored in the flash memory 180 and records the first EDID to the EEPROM 150-1, reads a second EDID stored in the flash memory 180 and records the second EDID to the EEPROM 150-2, and reads and records the other EDIDs in the same manner. So the EDIDs are recorded in the respective EEPROMs 150-1 to 150-5 sequentially.

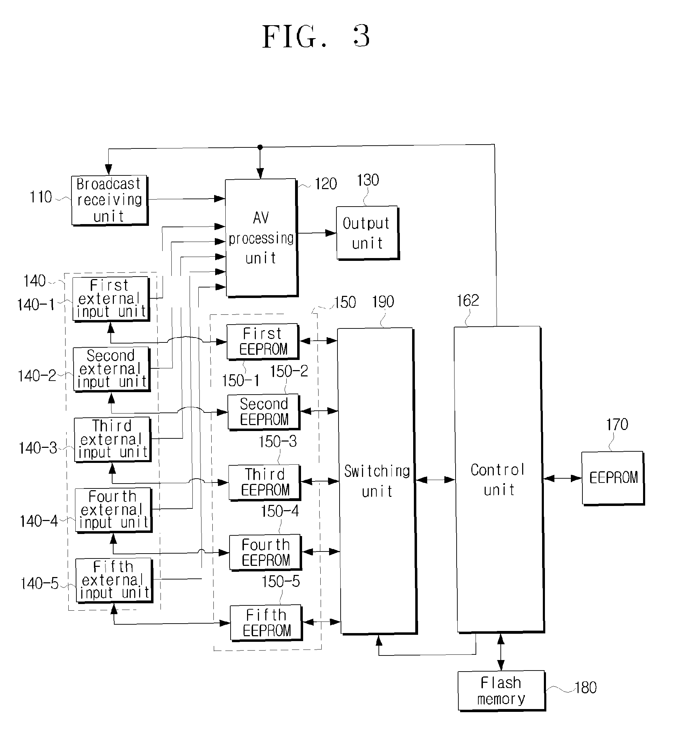

FIG. 3 illustrates a block diagram of a DTV according to a second exemplary embodiment of the present invention. Hereafter, the second exemplary embodiment of the present invention is explained referring to FIG. 3.

Descriptions about a broadcast receiving unit 110, an AV processing unit 120, an output unit 130, an external interface 140, a storage unit 150, an EEPROM 170, and a flash memory 180 of the DTV of FIG. 3 are omitted, because the functions and structures of the units are same as that of the corresponding units in the first exemplary embodiment or may be analogized from that of the corresponding units in the first exemplary embodiment.

A switching unit 190 is connected to the EEPROMs 150-1 to 150-5. the switching unit 190 switches the EEPROMs 150-1 to 150-5 sequentially to be connected electrically to a control unit 162. the control unit 162 controls switching operation of the switching unit 190.

The control unit 162 is connected to the EEPROMs 150-1 to 150-5 through the switching unit 190 and may send data to the EEPROMs 150-1 to 150-5 through the switching unit 190. The switching unit 190 may be connected to the control unit 162 by the I2C method and also connected to the EEPROMs 150-1 to 150-5 by the I2C method.

If the EDID record indicators in the EEPROM 170 are 1, the control unit 162 controls the switching operation of the switching unit 190, reads the EDIDs stored in the flash memory 180 sequentially, and records the EDIDs to the respective EEPROMs 150-1 to 150-5 sequentially. For example, the control unit 162 controls the switching unit 190 to connect the control unit 162 and the first EEPROM 150-1, reads a first EDID stored in the flash memory 180, and records the first EDID to the EEPROM 150-1. Next, the control unit 162 controls the switching unit 190 to connect the control unit 162 and the second EEPROM 150-2, reads a second EDID stored in the flash memory 180, and records the second EDID to the EEPROM 150-2. And the control unit 162 performs for the other EDIDs in the same manner. So the EDIDs are recorded in the respective EEPROMs 150-1 to 150-5 sequentially.

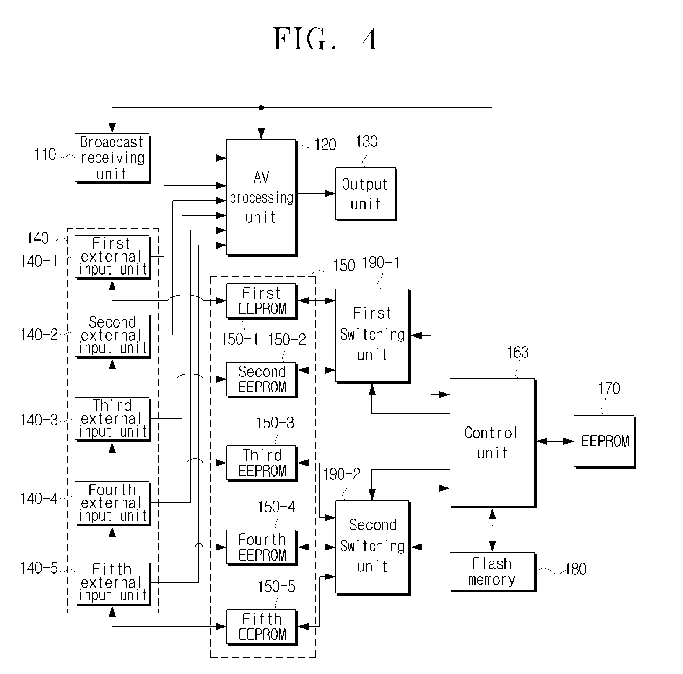

FIG. 4 illustrates a block diagram of a DTV according to a third exemplary embodiment of the present invention. Hereafter, the third exemplary embodiment of the present invention is explained referring to FIG. 4.

Descriptions about a broadcast receiving unit 110, an AV processing unit 120, an output unit 130, an external interface 140, a storage unit 150, an EEPROM 170, and a flash memory 180 of the DTV of FIG. 4 are omitted, because the functions and structures of the units are the same as that of the corresponding units in the first exemplary embodiment or may be analogized from that of the corresponding units in the first exemplary embodiment.

A first switching unit 190-1 is connected to the EEPROMs 150-1 to 150-2 and a second switching unit 190-2 is connected to the EEPROMs 150-3 to 150-5. The first switching unit 190-1 and the second switching unit 190-2 switch the EEPROMs 150-1 to 150-5 sequentially to be connected electrically to a control unit 163. The control unit 163 controls switching operations of the first switching unit 190-1 and the second switching unit 190-2.

The control unit 163 is connected to the EEPROMs 150-1 to 150-5 through the first switching unit 190-1 and the second switching unit 190-2, and may send data to the EEPROMs 150-1 to 150-5 through the first switching unit 190-1 and the second switching unit 190-2.

The first switching unit 190-1 and the second switching unit 190-2 may be connected to the control unit 163 by I2C method and also connected to the EEPROMs 150-1 to 150-5 by I2C method.

If the EDID record indicators in the EEPROM 170 are 1, the control unit 163 controls the switching operation of the first switching unit 190-1 and the second switching unit 190-2, reads the EDIDs stored in the flash memory 180 sequentially, and records the EDIDs to the respective EEPROMs 150-1 to 150-5 sequentially. For example, the control unit 163 controls the first switching unit 190-1 to connect the control unit 163 and the first EEPROM 150-1, reads a first EDID stored in the flash memory 180, and records the first EDID to the EEPROM 150-1. Next, the control unit 163 controls the first switching unit 190-1 to connect the control unit 163 and the second EEPROM 150-2, reads a second EDID stored in the flash memory 180, and records the second EDID to the EEPROM 150-2. Next, the control unit 163 controls the second switching unit 190-2 to connect the control unit 163 and the third EEPROM 150-3, reads a third EDID stored in the flash memory 180, and records the third EDID to the EEPROM 150-3. And the control unit 163 controls the second switching unit 190-2 and performs for the other EDIDs in the same manner. So the EDIDs are recorded in the respective EEPROMs 150-1 to 150-5 sequentially.

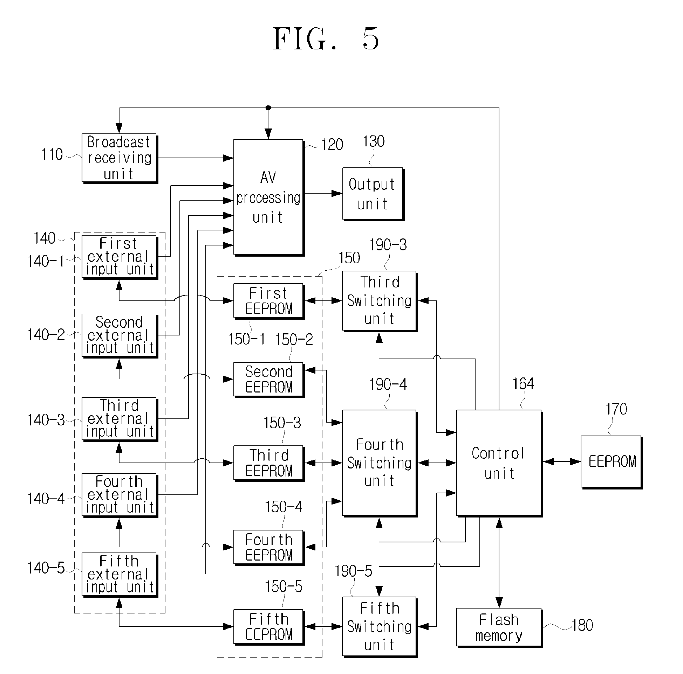

FIG. 5 illustrates a block diagram of a DTV according to a fourth exemplary embodiment of the present invention. Hereafter, the fourth exemplary embodiment of the present invention is explained referring to FIG. 5.

Descriptions about a broadcast receiving unit 110, an AV processing unit 120, an output unit 130, an external interface 140, a storage unit 150, a EEPROM 170, and a flash memory 180 of the DTV of FIG. 5 are omitted, because the functions and structures of the units are the same as that of the corresponding units in the first exemplary embodiment or may be analogized from that of the corresponding units in the first exemplary embodiment.

A third switching unit 190-3 is connected to the EEPROM 150-1, a fourth switching unit 190-4 is connected to the EEPROMs 150-2 to 150-4, and a fifth switching unit 190-5 is connected to the EEPROM 150-5. The third switching unit 190-3, the fourth switching unit 190-4, and the fifth switching unit 190-5 switch the EEPROMs 150-1 to 150-5 sequentially to be connected electrically to a control unit 164. The control unit 164 controls switching operations of the third switching unit 190-3, the fourth switching unit 190-4, and the fifth switching unit 190-5.

The control unit 164 is connected to the EEPROMs 150-1 to 150-5 through the third switching unit 190-3 to the fifth switching unit 190-5, and may send data to the EEPROMs 150-1 to 150-5 through the third switching unit 190-3 to the fifth switching unit 190-5.
The third switching unit 190-3 to the fifth switching unit 190-5 may be connected to the control unit 164 by the I2C method and also connected to the EEPROMs 150-1 to 150-5 by the I2C method.

If the EDID record indicators in the EEPROM 170 are 1, the control unit 164 controls the switching operation of the third switching unit 190-3 to the fifth switching unit 190-5, reads the EDIDs stored in the flash memory 180 sequentially, and records the EDIDs to the respective EEPROMs 150-1 to 150-5 sequentially. For example, the control unit 164 controls the third switching unit 190-3 to connect the control unit 164 and the first EEPROM 150-1, reads a first EDID stored in the flash memory 180, and records the first EDID to the EEPROM 150-1. Next, the control unit 164 controls the fourth switching unit 190-4 to connect the control unit 164 and the second EEPROM 150-2, reads a second EDID stored in the flash memory 180, and records the second EDID to the EEPROM 150-2. And the control unit 164 controls the fourth switching unit 190-4 and performs for the third and fourth EDIDs in the same manner. Finally, the control unit 164 controls the fifth switching unit 190-5 to connect the control unit 164 and the fifth EEPROM 150-5, reads a fifth EDID stored in the flash memory 180, and records the fifth EDID to the EEPROM 150-5. So the EDIDs are recorded in the respective EEPROMs 150-1 to 150-5 sequentially.

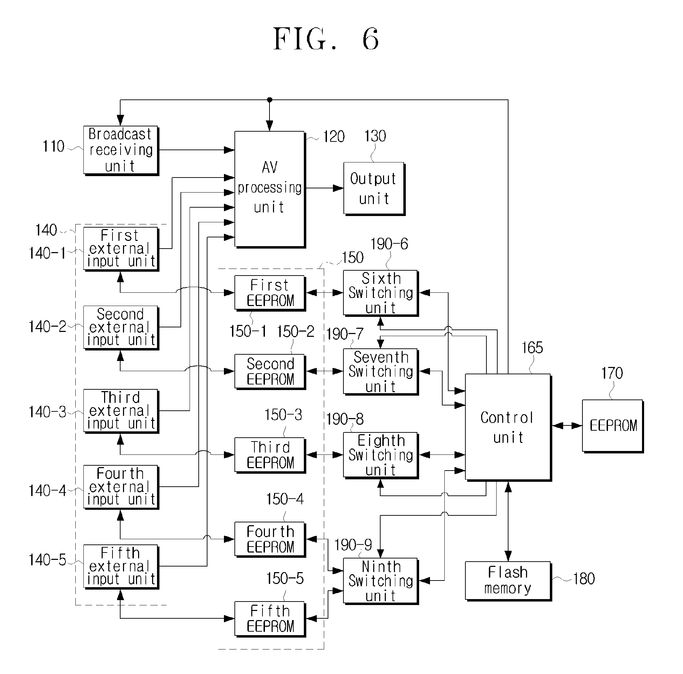

FIG. 6 illustrates a block diagram of a DTV according to a fifth exemplary embodiment of the present invention.

Descriptions about a broadcast receiving unit 110, an AV processing unit 120, an output unit 130, an external interface 140, a storage unit 150, a EEPROM 170, and a flash memory 180 of the DTV of FIG. 6 are omitted, because the functions and structures of the units are the same as that of the corresponding units in the first exemplary embodiment or may be analogized from that of the corresponding units in the first exemplary embodiment.

A sixth switching unit 190-6 is connected to the EEPROM 150-1, a seventh switching unit 190-7 is connected to the EEPROMs 150-2, a eighth switching unit 190-8 is connected to the EEPROMs 150-3, and a ninth switching unit 190-9 is connected to the EEPROM 150-4 to 150-5. The sixth switching unit 190-6 to the ninth switching unit 190-9 switch the EEPROMs 150-1 to 150-5 sequentially to be connected electrically to a control unit 165. The control unit 165 controls switching operations of the sixth switching unit 190-6 to the ninth switching unit 190-9.

The control unit 165 is connected to the EEPROMs 150-1 to 150-5 through the sixth switching unit 190-6 to the ninth switching unit 190-9, and may send data to the EEPROMs 150-1 to 150-5 through the sixth switching unit 190-6 to the ninth switching unit 190-9. The sixth switching unit 190-6 to the ninth switching unit 190-9 may be connected to the control unit 165 by the I2C method and also connected to the EEPROMs 150-1 to 150-5 by the 12C method.

If the EDID record indicators in the EEPROM 170 are 1, the control unit 165 controls the switching operation of the sixth switching unit 190-6 to the ninth switching unit 190-9, reads the EDIDs stored in the flash memory 180 sequentially, and records the EDIDs to the respective EEPROMs 150-1 to 150-5 sequentially. For example, the control unit 165 controls the sixth switching unit 190-6 to connect the control unit 165 and the first EEPROM 150-1, reads a first EDID stored in the flash memory 180, and records the first EDID to the first EEPROM 150-1. Next, the control unit 165 controls the seventh switching unit 190-7 and the eighth switching unit 190-8, and performs for the second and third EDIDs in the same manner. Next, the control unit 165 controls the ninth switching unit 190-9 to connect the control unit 165 and the fourth EEPROM 150-4, reads a fourth EDID stored in the flash memory 180, and records the fourth EDID to the EEPROM 150-4. Finally, the control unit 165 controls the ninth switching unit 190-9 and performs for the fifth EDIDs in the same manner. So the EDIDs are recorded in the respective EEPROMs 150-1 to 150-5 sequentially.

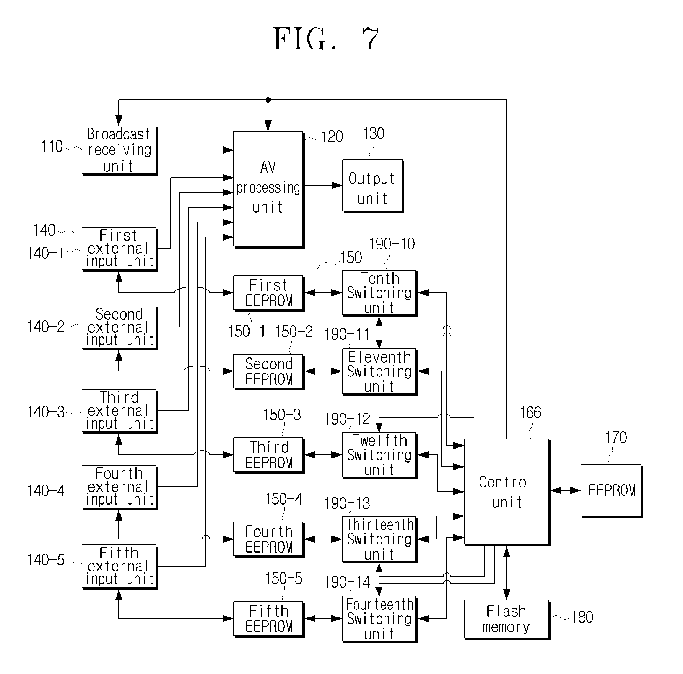

FIG. 7 illustrates a block diagram of a DTV according to a sixth exemplary embodiment of the present invention. Hereafter, the sixth exemplary embodiment of the present invention is explained referring to FIG. 7.

Descriptions about a broadcast receiving unit 110, an AV processing unit 120, an output unit 130, an external interface 140, a storage unit 150, a EEPROM 170, and a flash memory 180 of the DTV of FIG. 7 are omitted, because the functions and structures of the units are the same as that of the corresponding units in the first exemplary embodiment or may be analogized from that of the corresponding units in the first exemplary embodiment.

A tenth switching unit 190-10 to a fourteenth switching unit 190-14 are connected to the respective EEPROMs 150-1 to 150-5. The tenth switching unit 190-10 to the fourteenth switching unit 190-14 switch the EEPROMs 150-1 to 150-5 sequentially to be connected electrically to a control unit 166. The control unit 166 controls switching operations of the tenth switching unit 190-10 to the fourteenth switching unit 190-14.

The control unit 166 is connected to the EEPROMs 150-1 to 150-5 through the tenth switching unit 190-10 to the fourteenth switching unit 190-14, and may send data to the EEPROMs 150-1 to 150-5 through the tenth switching unit 190-10 to the fourteenth switching unit 190-14.

The tenth switching unit 190-10 to the fourteenth switching unit 190-14 may be connected to the control unit 166 by the I2C method and also connected to the EEPROMs 150-1 to 150-5 by the I2C method.

If the EDID record indicators in the EEPROM 170 are 1, the control unit 166 controls the switching operation of the tenth switching unit 190-10 to the fourteenth switching unit 190-14, reads the EDIDs stored in the flash memory 180 sequentially, and records the EDIDs to the respective EEPROMs 150-1 to 150-5 sequentially. For example, the control unit 166 controls the tenth switching unit 190-10 to connect the control unit 166 and the first EEPROM 150-1, reads the first EDID stored in the flash memory 180, and records the first EDID to the first EEPROM 150-1. Next, the control unit 166 controls the eleventh switching unit 190-11 to connect the control unit 166 and the second EEPROM 150-2, reads the second EDID stored in the flash memory 180, and records the second EDID to the second EEPROM 150-2. Next, the control unit 166 controls the twelfth switching unit 190-12 to the fourteenth switching unit 190-14, and performs for the third to fifth EDIDs in the same manner. So the EDIDs are recorded in the respective EEPROMs 150-1 to 150-5 sequentially.

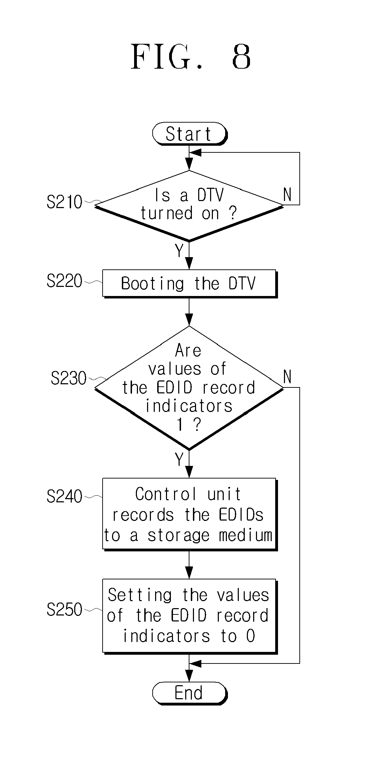

FIG. 8 illustrates a flowchart of an EDID recording operation in a DTV according to exemplary embodiments of the present invention. Hereafter, the recording operation of the present invention is explained referring to FIG. 8.

If the DTV is turned on (S21 0), the control units 161 to 166 boot the DTV (S220). IF the memories are on readable and writable status after the booting is finished, the control units 161 to 166 check the values of the EDID record indicators in the EEPROM 170 (S230).

If the values of the EDID record indicators are 1, that means that the EDIDs are not recorded in the EEPROMs 150-1 to 150-5 yet, so the control units 161 to 166 record the EDIDs stored in the flash memory 180 to the respective EEPROMs 150-1 to 150-5 sequentially (S240).

Descriptions about the recording method of the EDIDs to the EEPROMs 150-1 to 150-5 are omitted, because it is described already.

If the recording operation is finished, the control units 161 to 166 set the values of the EDID record indicators to 0 (S250). It means that the recording operation of the EDIDs to the EEPROMs 150-1 to 150-5 is accomplished. If the DTV is turned on again, the steps S240 and S250 are not performed again.

So far, it is described, using exemplary embodiments, that DTV itself records EDIDs in its own EEPROMs without any EDID recording device.

Here, the EDID is an example of data which an external device reads from a DTV or data which an external device refers for sending the DTV an image signal supported by the DTV. So present invention is not limited to the EDID but applicable to other data which an external device reads from the DTV or which an external device refers for sending the DTV an image signal supported by the DTV.

The PC, DVD player, and etc., which are mentioned above in exemplary embodiments are just examples of external devices. There is no limitation in a kind of external devices.

The DTV mentioned in embodiments is also an example of a display apparatus, so present invention may be applicable to other kinds of display apparatus such as a monitor, a Personal Multimedia Player (PMP), and a GPS device. The EEPROMs 150-1 to 150-5 and 170 and the flash memory 180 also may be substituted for other kinds of storage means.

Exemplary embodiments mentioned above just show the case that the external interface 140, but there is no limitation in the number of external devices.

Connection methods other than the I2C method may be used to connect the control units 161 to 163 and the switching unit 190, and connect the switching unit 190 to 190-14 and the EEPROMs 150-1 to 150-5.

Exemplary embodiments show the case that EDID recording is performed at the time when the DTV is turned on. But EDID recording may be performed at other time such as when a user commands or downloading a new version of EDID to the flash memory 180 is completed.

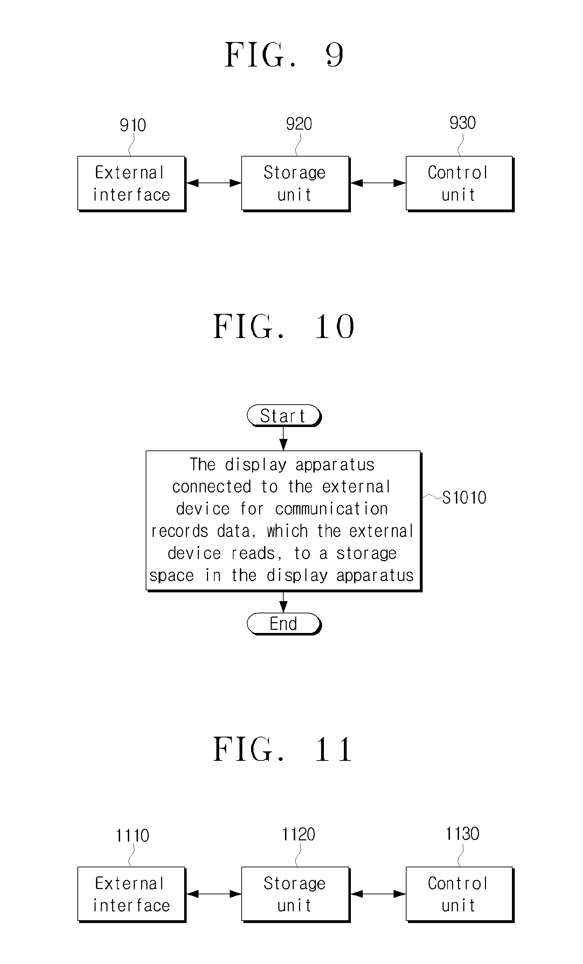

FIG. 9 illustrates a block diagram of a display apparatus according to an eighth exemplary embodiment of the present invention. Referring to FIG. 9, the display apparatus of the eighth exemplary embodiment comprises an external interface 910, a storage unit 920, and a control unit 930.

The external interface 910 is connected to an external device for communication. The storage unit 920 provides a storage space for recording data which the external device, connected through the external interface 910, reads. The control unit 930 records data, which the external device connected through the external interface 910 reads, in the storage unit 920.

FIG. 10 illustrates a flowchart of data recording operation in the display apparatus illustrated in FIG.9. Referring to FIG. 10, the display apparatus connected to the external device for communication records data, which the external device reads, to a storage space in the display apparatus (S1010).

FIG. 11 illustrates a block diagram of display apparatus according to a tenth exemplary embodiment of the present invention. Referring to FIG. 11, the display apparatus according to the tenth exemplary embodiment comprises an external interface 1110, a storage unit 1120, and a control unit 1130.

The external interface 1110 is connected to an external device for communication. The storage unit 1120 provides a storage space for recording data, which is referred by the external device to send an image signal supported by the display apparatus, in the external interface 1110. The control unit 1130 records data, which is referred by the external device to send an image signal supported by the display apparatus to the external interface 1110, in the storage unit 1120.

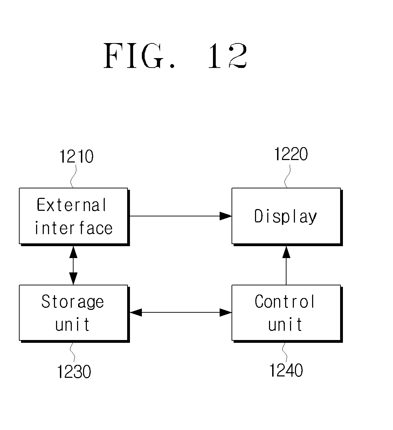

FIG. 12 illustrates a block diagram of display apparatus according to an eleventh exemplary embodiment of the present invention. Referring to FIG. 12, the display apparatus according to the eleventh exemplary embodiment comprises an external interface 1210, a display 1220, a storage unit 1230, and a control unit 1240.

The external interface 1210 is connected to an external device for communication. The display 1220 displays the image received from the external device through the external interface 1210. The storage unit 1230 provides a storage space for recording data related to display information. The control unit 1240 records the data, which is related to the display information, in the storage unit 1230.

According to the exemplary embodiments, it is shown that the display apparatus itself may record the data in its own storage unit without any data recording device.

According to the exemplary embodiments described so far, the display apparatus itself may record data, which an external device reads from the display apparatus or which an external device refers for sending the display apparatus an image signal supported by the display apparatus, in its own storage unit.

Because the display apparatus is capable to record the data without a data recording device, processes for manufacturing and for A/S are simplified and it becomes possible for a user to update or re-record this kind of data in the display apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an interface (140) which is connected to an external device for communication;
a storage unit (150); and
a control unit (161) which stores data in the storage unit (150),
wherein the external device reads the stored data through the interface (140).

2. The display apparatus of claim 1, wherein the external device refers to the stored data for sending an image signal supported by the display apparatus, to the interface (140).

3. The display apparatus of claim 2, wherein the data comprises Extended Display Identification Data (EDID) of the display apparatus.

4. The display apparatus of any one of claims 1 to 3, wherein the data comprises display information of the display apparatus.

5. The display apparatus of any one of claims 1 to 4, wherein the control unit (161) is connected to the storage unit (150) and sends the data to the storage unit (150).

6. The display apparatus of any one of claims 1 to 5, wherein the control unit (161) records the data to the storage unit (150) when an indicator has a predetermined value.

7. The display apparatus of claim 6, wherein the control unit (161) determines
whether the indicator has the predetermined value, when the display apparatus is turned on.

8. The display apparatus of any one of claims 1 to 7, wherein the interface (140) comprises at least one input unit (140-1,140-2) which is connected to at least one external device for communication, and the storage unit (150) comprises at least one storage medium (150-1,150-2) which is connected to the respective input unit.

9. The display apparatus of claim 8 further comprising at least one switching unit (190), wherein one of the at least one switching unit (190) connects at least one among the plurality of storage mediums to the control unit (161) in a switching operation, wherein the control unit (161) controls the switching operation of the at least one switching unit (190) so that the control unit (161) is sequentially connected to the plurality storage mediums.

10. The display apparatus of any one of claims 1 to 9 further comprising a memory (180) in which the data is recorded, wherein the control unit (161) reads the data from the memory (180) and stores the data in the storage unit.

11. The display apparatus of any one of claims 1 to 10, further comprising:
a broadcast receiving unit (110) which receives a broadcasting signal;
a signal processing unit (120) which processes at least one of the broadcasting signal received through the broadcast receiving unit (110), and the image signal received from the at least one external device through the interface (140); and
a display unit (130) which displays the at least one of the processed broadcasting signal and the processed image signal.

12. The display apparatus of any one of claims 1 to 10, further comprising:
a signal processing unit (120) which processes an image signal which is received from the external device through the interface (140); and
a display unit (130) which displays the at least one of the processed broadcasting signal processed in the signal processing unit (120) and the processed image signal.

13. A data recording method of a display apparatus connected to an external device for communication, the method comprising recording a data to a storage space (150) of the display apparatus, wherein the external device reads the recorded data.

14. The data recording method of claim 13, wherein the external device refers to the stored data to send an image signal supported by the display apparatus to the display apparatus.

15. The data recording method of claim 13, wherein the recording the data is performed only when an indicator has a predetermined value.
